# EUROPÄISCHE PATENTSCHRIFT

(11) **EP 2 480 161 B1**
(45) Veröffentlichungstag und Bekanntmachung des Hinweises auf die Patenterteilung: **08.01.2014**
(21) Anmeldenummer: 10763165.7
(22) Anmeldetag: 24.09.2010
(51) Int. Cl.: A61C 8/00

(54) **ZAHNERSATZANORDNUNG**
DENTAL PROSTHESIS SYSTEM
ENSEMBLE PROTHÉTIQUE DENTAIRE

(30) Priorität: 24.09.2009 CH 14732009
(43) Veröffentlichungstag der Anmeldung: 01.08.2012
(73) Patentinhaber: Dentalpoint AG, 8048 Zürich (CH)
(72) Erfinder: BOLLETER, Philip, CH-8048 Zürich (CH); CHIUSOLO, Nicola, CH-9230 Flawil (CH)
(74) Vertreter: Rentsch Partner AG
(86) Internationale Anmeldenummer: PCT/EP2010/064180
(87) Internationale Veröffentlichungsnummer: WO 2011/036268

(56) Entgegenhaltungen:
- EP-A1- 2 039 320
- WO-A2-2008/022635
- DE-A1- 10 340 059

## Beschreibung

Die Erfindung betrifft eine Zahnersatzanordnung, ein Verriegelungsbauteil für dieselbe und ein Verfahren zum Aufbau einer Zahnersatzanordnung gemäss den Oberbegriffen der unabhängigen Patentansprüche.

Unter den Begriffen "Zahnimplantat" oder "Dentalimplantat" werden seit Jahren verschiedenste Zahnersatzanordnungen auf dem Markt angeboten und zum Teil sehr erfolgreich eingesetzt. Die heute verwendeten Zahnersatzanordnungen sind meistens mehrteilig, weil sie so mehrere Kombinationsmöglichkeiten bieten und eine Belastung während der Einheilphase vermieden werden kann. Typische mehrteilige Zahnersatzanordnungen umfassen einen enossalen Implantatkörper zur Verankerung der Anordnung im Kieferknochen und ein Abutment (auch Verbindungsteil oder Implantatpfosten genannt) zur Aufnahme der Suprakonstruktion, z. B. einer Krone oder einer Brücke. Der Implantatkörper und das Abutment werden miteinander verklebt und/oder verschraubt, die Suprakonstruktion wird auf das Abutment aufgeklebt.

Implantatkörper aus Metall können mit einem Innengewinde versehen werden, in welches eine das Abutment fixierende Schraube eingeschraubt werden kann. Eine solche Schraubverbindung zwischen Implantatkörper und Abutment hat den Vorteil, bei Bedarf lösbar zu sein. Dafür haben metallische Implantatkörper andere Nachteile. Wenn nach längerer Tragdauer des Zahnimplantats die Kieferschleimhaut zurückgeht, wird der Implantatkörper sichtbar und aufgrund seiner dunklen Färbung auch optisch wahrnehmbar, was ästhetisch unbefriedigend ist. Ferner werden viele metallische Werkstoffe als körperfremd erkannt und heilen nicht in den Kieferknochen ein. Ausserdem ist nicht ausgeschlossen, dass langfristig gewisse Mengen an Metall aus dem Implantatkörper gelöst werden, in den Körper gelangen und dort schädlich wirken. Aus diesen ästhetischen und medizinischen Gründen würde man Implantatkörper aus Keramik bevorzugen. Diese haben jedoch den Nachteil, dass sie keine direkte Schraubverbindung mit dem Abutment eingehen können. Stattdessen wird das Abutment im Implantatkörper mit einem Kleber oder einem Zement dauerhaft fixiert. Somit kann das Abutment zu einem späteren Zeitpunkt nicht zerstörungsfrei aus dem Implantatkörper gelöst werden. Zudem ist nicht ausgeschlossen, dass der verwendete Kleber oder Zement vom Körper aufgenommen wird und darin unerwünschte Auswirkungen hat.

Die DE-103'40'059 A1 offenbart ein Zahnimplantat, welches einen eine lösbare Schraubverbindung zwischen einem keramischen Implantatkörper und dem Abutment zulässt. Der Implantatkörper weist eine koaxial zu seiner Mittelachse verlaufende, den Implantatkörper vollständig durchdringende Innenbohrung mit einer oberen (koronalen) und einer unteren Öffnung auf. Durch die obere Öffnung ist das Abutment mit einer eigenen, zu seiner Mittelachse verlaufenden Abutmentinnenbohrung einführbar. Durch die untere Öffnung ist eine Gewindehülse in die Innenbohrung des Implantatkörpers einführbar. Das Abutment ist mittels einer in die Abutmentinnenbohrung einführbaren Kopfschraube im Implantatkörper fixierbar, wobei die Kopfschraube in der Gewindehülse festlegbar ist. Der Implantatkörper kann aus einem Keramikmaterial, die Gewindehülse aus einem metallischen Werkstoff wie Titan gefertigt sein. Problematisch ist bei dieser Lösung die Fixierung der axialen Position der eingeführten Gewindehülse, ihre Verdrehsicherung und der Abschluss der unteren Öffnung.

Gattungsgemässe Zahnersatzanordnungen sind auch aus drei Veröffentlichungen der Anmelderin des vorliegenden Schutzrechtes bekannt, die nachfolgend diskutiert werden.

In der WO-2009/009909 A1 wird ein Zahnersatzsystem mit einem Implantatkörper und einem Abutment vorgeschlagen, bei dem im Kontaktbereich zwischen der Krone und dem Implantatkörper eine Reinigungsrille vorgesehen ist. Die Reinigungsrille dient zur Aufnahme und anschliessenden Abreinigung von überflüssigem Klebstoff, der beim Aufkleben der Krone austritt.

Gemäss der WO-2009/009910 A1 ist ein Abutmentstamm, umfassend einen Passzylinder, in einem korrespondierenden zylinderischen Passsitz einer Aufnahmeöffnung im Implantatkörper einpassbar. Dadurch wird eine optimierte Krafteinleitung vom Abutment in den Implantatkörper sichergestellt und volle Freiheit bei der Materialauswahl zugelassen. Der Implantatkörper und das Abutment können aus Titan oder Keramik hergestellt werden, und beide Bauteile können in allen möglichen Materialkombinationen zum Einsatz kommen. Dadurch wird das Einkleben von keramischen Abutments in Implantatkörper aus Titanoxid oder anderen metallischen Werkstoffen ermöglicht.

Die WO-2009/009911 A1 offenbart ein Zahnersatzsystem, bei dem durch das formschlüssige Zusammenwirken von Arretiermitteln an einer proximalen Abutmentbasis und mindestens einer Innenrand des proximalen Abschnittes einer Aufnahmeöffnung im Implantatkörper das Abutment in mindestens zwei radialen Winkelstellungen positionierbar ist. Die Arretiermittelpaarungen basieren vorzugsweise auf regelmässigen Mehrkanten. Durch die einfachen Herstellungsmöglichkeiten besteht volle Freiheit bei der Materialauswahl, so dass auch bei diesem Zahnersatzsystem beide Bauteile in allen möglichen Materialkombinationen zum Einsatz kommen können.

Es ist eine Aufgabe der vorliegenden Erfindung, eine Zahnersatzanordnung zu schaffen, welche die Vorteile eines Implantatkörpers aus Keramik und einer lösbaren Schraubverbindung zwischen dem Implantatkörper und dem Abutment vereinigt, die genannten Nachteile der DE-103'40'059 A1 jedoch vermeidet. Insbesondere soll das Abutment gegen Verschiebungen in axialer Richtung und gegen Verdrehungen um die Längsachse gesichert sein. Der Einbau und die Fixierung des Abutments im Implantatkörper soll trotzdem einfach sein.

Die WO 2008/022635 zeigt ein zweiteiliges Zahnimplantat umfassend ein Verbundsystem mit einem ersten bzw. distalen Implantatsteil und einem zweiten bzw. proximalen Implantatsteil. Das erste Implantatsteil weist eine Gewindehülse auf, die durch eine Befestigungsschraube mit dem zweiten Implantatsteil verbunden ist. Der distale Implantatsteil ist als künstliche Zahnwurzel für die Implantation in einem Kieferknochen ausgebildet. Der proximale Implantatsteil trägt im eingebauten Zustand eine künstliche Zahnkrone. Das distale Implantatsteil besteht aus Nichtmetall, die Gewindehülse aus Metall. Das proximale Ende des distalen Implantatsteils und das distale Ende des proximalen Implantatteils sind geometrisch zueinander passend gestaltet und grenzen im implantierten Zustand des Schaftes aneinander an. Die Gewindehülse ist über ein Aussengewinde in das erste bzw. distale Implantatsteil eingeschraubt.

Diese und andere Aufgaben werden durch die erfindungsgemässe Zahnersatzanordnung gelöst, wie sie im ersten Patentanspruch definiert ist. Vorteilhafte Ausführungsformen sind in den abhängigen Ansprüchen angegeben.

Die Grundidee der Erfindung ist es, Verriegelungsmittel vorzusehen, mittels derer eine Gewindehülse im einer Implantatkörperinnenbohrung formschlüssig verankert wird. Das Abutment kann dann in an sich bekannter Weise mittels einer in die Gewindehülle eingreifenden Schraube, vorzugsweise einer Kopfschraube am Implantatkörper befestigt werden. Diese Anordnung kommt ohne Klebstoff oder Zement aus, auch wenn stoffschlüssige Verbindungen gemäss der Erfindung nicht ausgeschlossen sind. Somit kann das Abutment bei Bedarf zerstörungsfrei aus dem Implantatkörper gelöst werden.

Die erfindungsgemässe Zahnersatzanordnung umfasst einen enossalen Implantatkörper zur Verankerung der Zahnersatzanordnung in einem Kieferknochen. Der Implantatkörper weist eine Innenbohrung auf. In der Implantatkörperinnenbohrung ist eine Gewindehülse form-und/oder kraftschlüssig verankerbar. Ein Abutment, das zur Aufnahme einer Suprakonstruktion dient, weist eine Abutmentinnenbohrung auf. Eine Schraube, vorzugsweise eine Kopfschraube, dient zur Verbindung des Abutments mit dem Implantatkörper, wobei der Kopf der Kopfschraube formschlüssig in der Abutmentinnenbohrung abgestützt ist und ein Gewindeteil der Kopfschraube in die Gewindehülse eingreift. Die Gewindehülse ist mittels Verriegelungsmittel in der Implantatkörperinnenbohrung formschlüssig verankert. Die Verriegelungsmittel sind mit der Gewindehülse wirkverbunden und an dieser befestigt, einstückig mit dieser hergestellt oder in der Implantatkörperinnenbohrung angebracht. Die Implantatkörperinnenbohrung ist nicht durchgehend. Die Verriegelungsmittel sind in einer Ringnut abgestützt, die in einer Wand der Implantatkörperinnenbohrung angebracht ist. Die Verriegelungsmittel sind als ein in radialer Richtung nach aussen spreizbares Verriegelungsbauteil ausgebildet sein, welches in einem ungespreizten Zustand in die Implantatkörperinnenbohrung einführbar ist und in einem gespreizten Zustand in die Ringnut eingreift. Zu diesem Zweck kann das Verriegelungsbauteil mindestens zwei flügelartige, in einer zu einer Längsachse senkrechten Ebene angeordnete Sektoren beinhalten, die durch dehnbare, vorzugsweise elastische Verbindungsmittel miteinander verbunden sind. Das Verriegelungsbauteil kann eine Bohrung aufweisen, in welche ein konusförmiges Ende der Gewindehülse eindringt, um das Verriegelungsbauteil nach aussen zu spreizen.

Das erfindungsgemässe Verriegelungsbauteil für eine erfindungsgemässe Zahnersatzanordnung ist von einem Einführzustand, in dem es eine erste seitliche Ausdehnung hat, in einen Endzustand überführbar, in dem es eine zweite seitliche Ausdehnung hat, die grösser ist als die erste seitliche Ausdehnung.

In einer bevorzugten Ausführungsform beinhaltet das Verriegelungsbauteil mindestens zwei flügelartige, in einer zu einer Längsachse senkrechten Ebene angeordnete Sektoren, die durch dehnbare, vorzugsweise elastische Verbindungsmittel miteinander verbunden sind. Das Verriegelungsbauteil kann eine Bohrung aufweisen und infolge eines Eindringens eines konusförmiges Gegenstandes in die Bohrung nach aussen spreizbar sein.

In einer weiteren bevorzugten Ausführungsform sind Gewindehülse und Verriegelungsmittel einstückig ausgebildet. Die formschlüssige Verankerung in einer in der der Implantatkörperinnenbohrung umlaufenden Ringnut wird durch eine Mehrzahl von Verriegelungsmitteln erreicht, die als Abschnitte einer nach aussen stehenden Radialrippe auf jeweils einzelnen voneinander beabstandeten flexiblen Zungen im proximalen Bereich der Gewindehülse angeordnet sind. Beim Einführen der Gewindehülse in die Implantatkörperinnenbohrung erlauben es die flexiblen Zungen, dass die Radialrippen zusammengepresst werden und beim Erreichen der Ringnut im wesentlichen in einer zu einer Längsachse senkrechten Ebene in ihre äussere Radialposition schnappen und die Gewindehülse verriegeln. Durch das Einschrauben der Kopfschraube wird einerseits das Abutment mit dem Implantatkörper verbunden, andererseits ist die Länge der Schraube so bemessen, dass sie tief genug in die Gewindehülse eindringt um ein radiales Zusammenpressen der flexiblen Zungen gegen Innen zu verhindern. Zum Entfernen des Abutments wird die Schraube gelöst und teilweise herausgedreht. Sobald der proximale Bereich der Gewindehülse mit den flexiblen Zungen freigegeben ist, kann diese durch entsprechenden Zug an der Schraube aus der Implantatkörperinnenbohrung herausgezogen werden, da die Zungen nun nach innen gedrückt werden können. Um das Einführen und das Herausziehen der Gewindehülse zu erleichtern werden die Verriegelungsmittel vorzugsweise in axialer Richtung abgerundet oder zumindest angeschrägt ausgebildet. Die Gewindehülse kann derart ausgebildet sein, dass die proximalen Enden der Zungen in Ruheposition zur Längsachse hin geneigt sind und erst durch das Eindrehen der Schraube nach aussen gespreizt werden.

Im erfindungsgemässen Verfahren zum Aufbau einer erfindungsgemassen Zahnersatzanordnung wird die Kopfschraube von einer distalen Seite her in die Abutmentinnenbohrung eingeführt, so dass ihr Gewindeteil auf einer proximalen Seite aus dem Abutment herausragt. Gemäss einer Ausführungsform wird das Verriegelungsbauteil mit seiner Bohrung auf den Gewindeteil aufgesetzt und mit der Gewindehülse gesichert. Die so zusammengehaltenen Elemente werden in die Implantatkörperinnenbohrung eingeführt. Die Kopfschraube wird fester angezogen, so dass das konusförmige Ende der Gewindehülse in die Verriegelungsbauteilbohrung gedrückt wird. Das Verriegeiungsbauteil wird durch das Eindringen des konusförmigen Endes der Gewindehülse nach aussen in die Ringnut gespreizt.

Als Hauptvorteil der erfindungsgemässen Zahnersatzanordnung wird die Möglichkeit der reversiblen Verbindung zwischen dem Implantatkörper und dem Abutment angesehen. Trotzdem kann der Implantatgrundkörper vollständig metallfrei, z. B. aus einem Keramikmaterial, gestaltet werden. Auch das Abutment kann komplett metallfrei ausgeführt werden, z. B. aus "gehipptem" (d. h. mit dem isostatischen Heisspressverfahren, englisch hot isostatic pressing, abgekürzt HIP, hergestellten) Keramikmaterial. Der Aufbau der erfindungsgemässen Zahnersatzanordnung ist keramikgerecht und insbesondere spannungsfrei. Seine mechanische Festigkeit genügt den Anforderungen. Die Winkellage des Abutments kann beim Einbau gewählt werden, z. B. aus sechs Positioniermöglichkeiten. Die Zahnersatzanordnung ist vergleichsweise kostengünstig herstellbar.

Die für die erfindungsgemässe Zahnersatzanordnung benötigten Implantatkörper sind im Wesentlichen mit den bereits bekannten und bewährten Implantatkörpern identisch. Der Implantatkörper der erfindungsgemässen Zahnersatzanordnung kann ausserhalb der vorliegenden Erfindung für eine stoffschlüssige Verbindung mit einem Abutment verwendet werden. Diese Verwendbarkeit des Implantatkörpers sowohl in als auch ausserhalb der erfindungsgemässen Zahnersatzanordnung erhöht die Wirtschaftlichkeit, well dank der verschiedenen Verwendungsmöglichkeiten grössere Stückzahlen hergestellt und damit die Herstellungskosten gesenkt werden können. Zudem wird die Lagerhaltung beim Händler und in der Praxis vereinfacht, da sich ein einziger Implantattyp sowohl für Schraubverbindungen und auch für Klebeverbindungen der Abutments verwenden lässt.

Nachfolgend werden bevorzugte Ausführurgsformen der Erfindung mit Bezugnahme auf die beiliegenden Zeichnungen detailliert erläutert.
- Figur 1: zeigt eine Explosionszeichnung einer ersten Ausführungsform der erfindungsgemässen Zahnersatzanordnung.
- Figur 2: zeigt wesentliche Teile der Zahnersatzanordnung von Fig. 1 (a) in einer Frontalansicht und (b) in einem Längsschnitt.
- Figur 3: zeigt die zusammengesetzte Zahnersatzanordnung von Fig. 1 (a) in einer Frontalansicht und (b) in einem Längsschnitt.
- Figur 4: zeigt einen Implantatkörper der Zahnersatzanordnung von Fig. 1 (a) in einer Frontalansicht und (b) in einem Längsschnitt.
- Figur 5: zeigt ein Abutment und weitere Elemente der Zahnersatzanordnung von Fig. 1 in einem Einführzustand (a) in einer Frontalansicht und (b) in einem Längsschnitt.
- Figur 6: zeigt das Abutment von Fig. 6 in einem Endzustand, in welchem das Verriegelungsmittel gespreizt ist.
- Figur 7: zeigt eine erste Ausführungsform eines Verriegelungsmittels für die erfindungsgemässe Zahnersatzanordnung (a) in einer perspektivischen Ansicht, (b) in einer Draufsicht und (c) in einer Seitenansicht.
- Figur 8: zeigt einen Teil einer zweiten Ausführungsform eines Verriegelungsmittels für die erfindungsgemässe Zahnersatzanordnung (a) in einer perspektivischen Ansicht, (b) in einer Draufsicht und (c) in einem Querschnitt.
- Figur 9: zeigt eine dritte Ausführungsform eines Verriegelungsmittels für die erfindungsgemässe Zahnersatzanordnung (a) in einer perspektivischen Ansicht, (b) in einer Rückansicht und (c) in einer Draufsicht.
- Figur 10: zeigt einen Teil einer vierten Ausführungsform eines Verriegelungsmittels für die erfindungsgemässe Zahnersatzanordnung (a) in einer perspektivischen Ansicht, (b) in einer Rückansicht und (c) in einer Draufsicht.
- Figur 11: zeigt eine fünfte Ausführungsform eines Verriegelungsmittels für die erfindungsgemässe Zahnersatzanordnung (a) in einer perspektivischen Ansicht, (b) in einer Draufsicht und (c) in einer Frontansicht.
- Figur 12: zeigt einer Implantatkörper einer zweiten Ausführungsform der erfindungsgemässen Zahnersatzanordnung (a) in einer Draufsicht und (b) in einem Längsschnitt.
- Figur 13: zeigt ein Abutment der Ausführungsform gemäss Fig. 12 in einer Draufsicht.
- Figur 14: zeigt zwei Füllelemente der Ausführungsform gemäss Fig. 12 in einer Draufsicht.
- Figur 15: zeigt eine Explosionszeichnung einer weiteren Ausführungsform der erfindungsgemässen Zahnersatzanordnung.
- Figur 16: zeigt wesentliche Teile der Zahnersatzanordnung von Fig. 15 (a) in einer Frontalansicht und (b) in einem Längsschnitt.
- Figur 17: zeigt die zusammengesetzte Zahnersatzanordnung von Fig. 15 (a) in einer Frontalansicht und (b) in einem Längsschnitt.

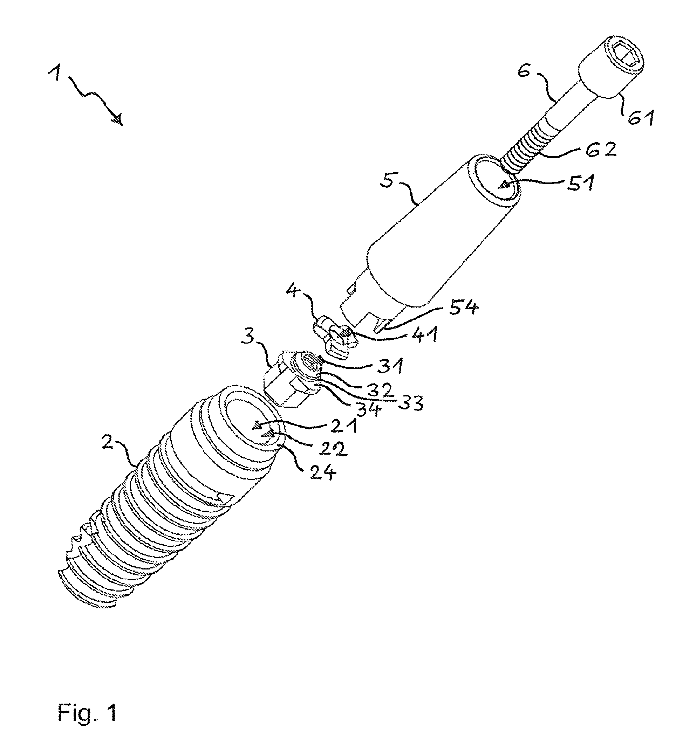

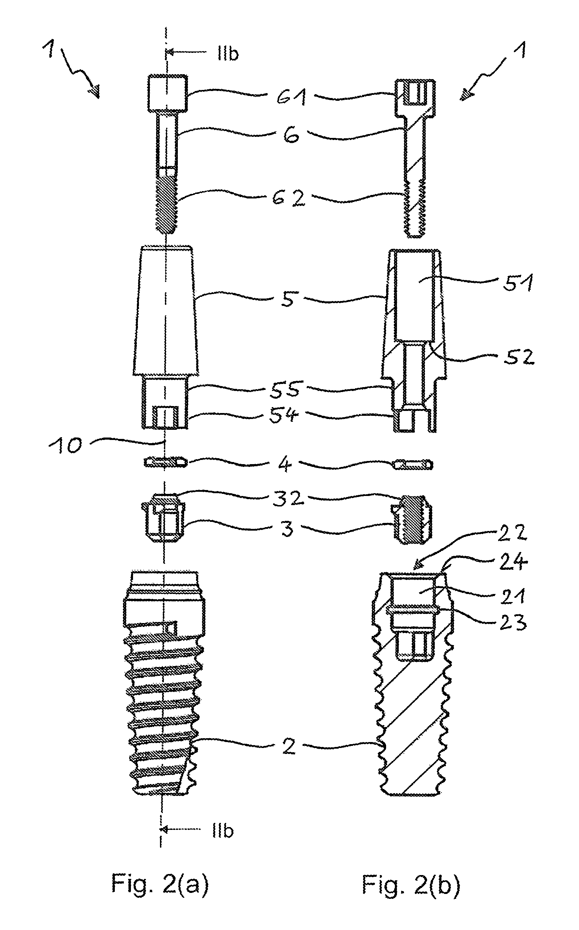

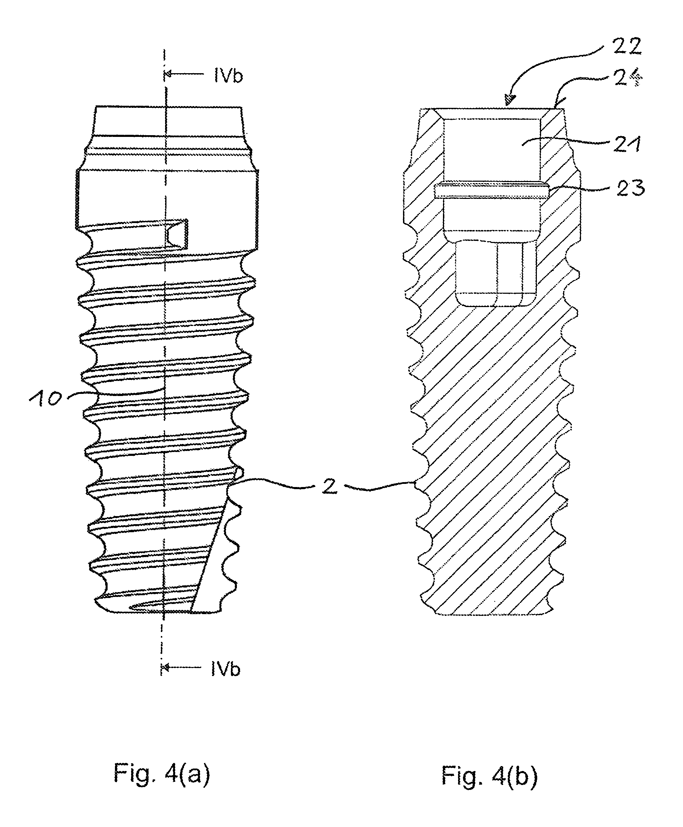

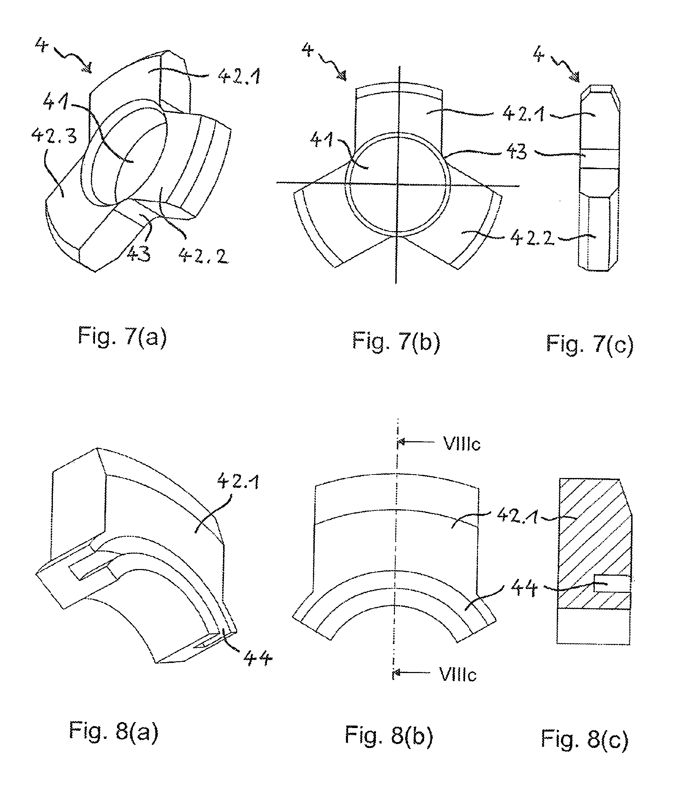

Eine erste Ausführungsform der erfindungsgemässen Zahnersatzanordnung 1 bzw. Teile davon sind in den Figuren 1-6 in verschiedenen Ansichten und Schnittzeichnungen dargestellt, dazu passende Verriegelungsmittel 4 in den Figuren 7-11.

Die Zahnersatzanordnung 1 beinhaltet einen enossalen Implantatkörper 2 zur Verankerung der Zahnersatzanordnung 1 in einem (hier nicht eingezeichneten) Kieferknochen. Der Implantatkörper 2 weist in seinem oberen (distalen) Bereich eine nicht durchgehende Innenbohrung 21 auf, die im Wesentlichen koaxial mit einer Längsachse 10 des Implantatkörpers 2 bzw. der Zahnersatzanordnung 1 verläuft. Der Implantatkörper 2 besteht vorzugsweise aus einem Keramikmaterial (z. B. ZERAMEX^{®}) oder einem biokompatiblen Metall wie Titan. Somit entspricht der Implantatkörper 2 in grossen Teilen den aus dem Stand der Technik bekannten, bewährten Implantatkörpern.

Die Implantatkörperinnenbohrung 21 dient der Verankerung einer Gewindehülse 3, auf deren Funktion weiter unten eingegangen wird. Die Gewindehülse 3 kann z. B. aus Stahl, Titan, einem Kunststoff oder einem Keramikmaterial bestehen.

Ferner beinhaltet die Zahnersatzanordnung 1 ein Abutment 5 zur Aufnahme einer (hier nicht eingezeichneten) Suprakonstruktion, bspw. einer Krone oder einer Brücke. Das Abutment 5 kann z. B. aus einer Zirkonoxidkeramik bestehen. Es weist eine durchgehende Innenbohrung 51 auf, die im Wesentlichen koaxial mit der Längsachse 10 des Abutments bzw. der Zahnersatzanordnung 1 verläuft.

Die Abutmentinnenbohrung 51 nimmt eine Kopfschraube 6 zur Verbindung des Abutments 5 mit dem Implantatkörper 2 auf. Ein Kopf 61 der Kopfschraube 6 ist formschlüssig in der Abutmentinnenbohrung 51 abgestützt, bspw. an einer im Inneren der Abutmentinnenbohrung 51 angebrachten umlaufenden Schulter 52. Ein Gewindeteil 62 der Kopfschraube 6 mit einem Aussengewinde greift in ein entsprechendes Innengewinde 31 der Gewindehülse 3 ein. Die Kopfschraube 6 kann z. B. aus Stahl, Titan, einem Kunststoff oder einem Keramikmaterial bestehen.

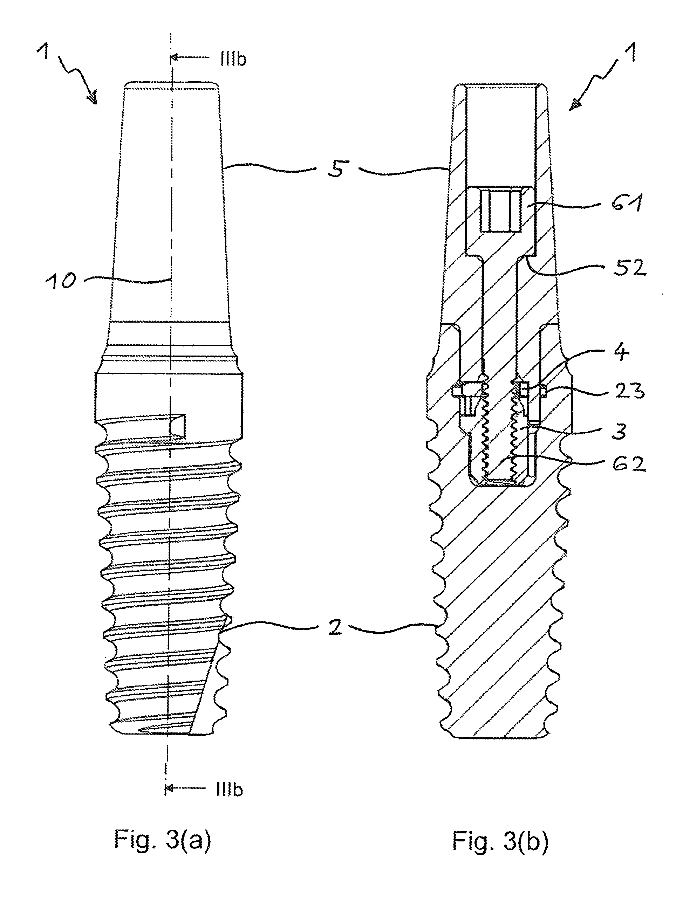

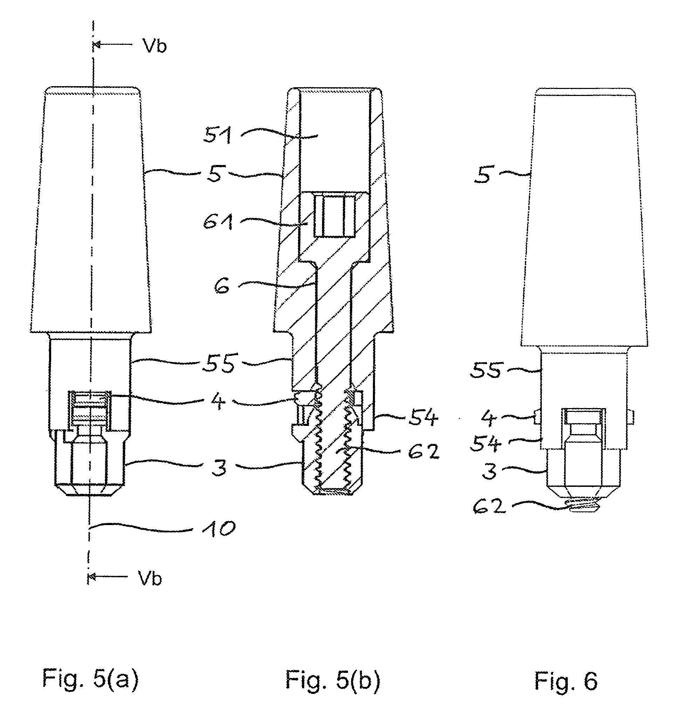

Die Gewindehülse 3 ist mittels eines formschlüssig in der Implantatkörperinnerbohrung 21 abgestützten Verriegelungsmittels 4 in der Implantatkörperinnenbohrung 21 verankert. In der ersten Ausführungsform der Figuren 1-11 ist das Verriegelungsmittel als separates Verriegelungsbauteil 4 ausgebindet. Das Verriegelungsbauteil 4 ist mittels einer Bohrung 41 auf die Kopfschraube 6 aufgesetzt und in einer Ringnut 23 abgestützt, die in einer Wand der Implantatkörperinnenbohrung 21 angebracht ist. Das Verriegelungsbauteil 4 ist so beschaffen, dass in einem Einführzustand, in dem es in die Implantatkörperinnenbohrung 21 eingeführt wird, seine maximale radiale Ausdehnung kleiner ist als ein Durchmesser der Implantatkörperinnenbohrung, so dass es durch eine obere (distale) Öffnung 22 in die Implantatkörperinnenbohrung 21 eingeführt werden kann. Dieser Einführzustand ist in Figur 5 gezeigt. In einem Endzustand, der in den Figuren 3 und 6 gezeigt ist, hat das Verriegelungsbauteil 4 hingegen eine radiale Ausdehnung, die grösser ist als der Durchmesser der Implantatkörperinnenbohrung 21 und gerade noch in die Ringnut 23 passt. So kommt ein Formschluss zwischen dem Verriegelungsbauteil 4 und der Ringnut 23 zustande.

Nachfolgen wird das Einsetzen, d. h. das Einführen und das Befestigen des Abutments 5 im bereits inserierten Implantatkörper 2 beschrieben. Die Kopfschraube 6 wird von oben in die Abutmentinnenbohrung 51 eingeführt, so dass ihr unterer Gewindeteil 62 aus einer unteren (proximalen) Öffnung aus dem Abutment 5 herausragt. Von unten wird das Verriegelungsbauteil 4 mit seiner Bohrung 41 auf den Gewindeteil 62 aufgesetzt und mit der Gewindehülse 3 gesichert. Die Kopfschraube 6 wird angezogen, aber nur so leicht, dass das Verriegelungsbauteil 4 in seinem Einführzustand (siehe Figur 5) verbleibt. Die so zusammengehaltenen Elemente 3-6 werden nun von oben in die Implantatkörperinnenbohrung 21 eingeführt. Wenn sie ihre Endlage in der Implantatkörperinnenbohrung 21 erreicht haben, wird die Kopfschraube 6 fester angezogen. Dadurch wird ein konusförmiges oberes Ende 32 der Gewindehülse 3 in die Verriegelungsbauteilbohrung 41 gedrückt. Beim Eindringen des konusförmigen Endes 32 der Gewindehülse 3 wird die axiale Kraft durch die Keilwirkung in eine radiale Kraft umgewandelt, welche das Verriegelungsbauteil 4 nach aussen in die Ringnut 23 spreizt. Der gespreizte Endzustand ist in Figur 6 dargestellt.

Der Endzustand ist in Figur 3 gezeigt. Das gespreizte Verriegelungsbauteil 4 stützt sich in der Ringnut 23 ab und verankert so die Gewindehülse 3 in der Implantatkörperinnenbohrung 21. Das Abutment 5 wird mit einer durch die Anziehung der Kopfschraube 6 definierten axialen Kraft gegen einen oberen Rand 24 des Implantatkörpers 2 und gegen das im Implantatkörper 2 abgestützte Verriegelungsbauteil 4 gedrückt. Das Verriegelungsbauteil 4 wird durch einen zylindrischen Teil 33 am oberen Ende der Gewindehülse 3 in Position gehalten und fest zwischen dem Abutment 5 und Stützflanken 34 der Gewindehülse 3 verspannt. Durch den zylinderischen Teil 33 der Gewindehülse 3 wird die Kopfschraube 6 von den durch das Verspannen des Verriegelungsbauteils 4 auftretenden Zugkräften entlastet. Dies ermöglicht es, nach dem Einbau des Abutments 5 die metallische Kopfschraube 6 zu entfernen und durch eine bspw. aus Kunststoff bestehende (nicht eingezeichnete) Sicherungsschraube zu ersetzen. So kann ein völlig metallfreier Aufbau der Zahnersatzanordnung 1 realisiert werden.

Die Implantatkörperinnenbohrung 21 kann einen vieleckigen, vorzugsweise einen dreieckigen, Querschnitt haben. Die Gewindehülse 3 ihrerseits hat einen dazu passenden, vorzugsweise sechseckigen, Aussenquerschnitt. Der Aussenquerschnitt der Stützflanken 34 der Gewindehülse 3 und ein zwischen die Stützflanken 34 eingreifender unterer Teil 54 des Abutments 5 sind ebenfalls aufeinander angepasst, vorzugsweise in der Form eines Dreikants. Diese Vielkantkonstruktion sichert im Endzustand das Abutment 5 gegen Verdrehung um die Längsachse 10 im Implantatkörper 2. Ausserdem ermöglicht sie beim Einsetzen eine Rotationspositionierung des Abutments 5. Mit den bevorzugten Dreikanten bzw. Sechskanten sind, analog zum bekannten ZERAMEX^{®}-Aufbau, sechs Positionen möglich, die jeweils um 60° gegeneinander gedreht sind. Selbstverständlich sind Drehsymmetrien mit anderen Drehsymmetriewinkeln sowie auch nicht drehsymmetrische Anordnungen möglich.

Oberhalb des Verriegelungsmittels 4 ist ein zylindrischer Abutmentpfosten 53 in einem zylindrischen Teil der Implantatkörperinnenbohrung 21 passgenau eingesetzt. Dies gewährleistet einen guten Halt in radialer Richtung. Durch Anpassen der Toleranzen des Abutmentpfostens 54 können Mikrobewegungen minimiert werden. Damit kein Blut und Speichel in die Implantatkörperinnenbohrung 21 gelangt, kann auf den oberen Rand 24 des Implantatkörpers 2 eine (nicht eingezeichnete) flexible Dichtmasse aufgetragen werden. Die Dichtmasse nimmt zusätzlich Mikrobewegungen auf und dämpft sie.

Die Figuren 7-11 zeigen fünf verschiedene Ausführungsformen des Verriegelungsbauteils 4, wie es für die erfindungsgemässe Zahnersatzanordnung 1 gemäss den Figuren 1-6 benötigt wird. Das Verriegelungsbauteil 4 kann aus Stahl, Titan, Kunststoff oder Keramik bestehen.

Das einstückige Verriegelungsbauteil 4 der Figur 7 besteht im Wesentlichen aus drei in einer zur Längsachse 10 senkrechten Ebene drehsymmetrisch angeordneten Flügeln 42.1-42.3, die durch einen elastischen, die Bohrung 41 umgebenden Ring 43 zusammen gehalten werden. Durch das oben beschriebene Eindringen des konusförmigen Endes 32 der Gewindehülse 3 in die Bohrung 41 werden der Ring 43 gedehnt und die Flügel 42.1-42.3 nach aussen in die Ringnut 23 gedrückt.

In der Ausführungsform von Figur 8 sind die drei Flügel des Verriegelungsbauteils 4 als separate sektorartige Teile ausgebildet, von denen in Figur 8 nur ein Flügel 42.1 dargestellt ist. Sie werden von einem dehnbaren, vorzugsweise elastischen (nicht eingezeichneten) Ring zusammengehalten, der in Nuten 44 eingesetzt ist.

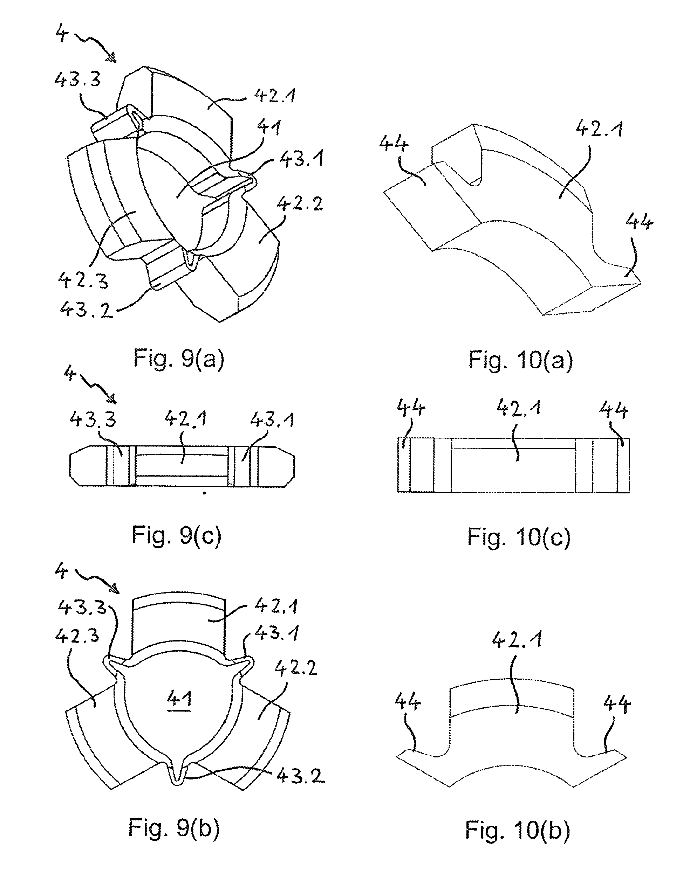

Die Ausführungsform von Figur 9 ist einstückig ausgebildet. Die drei Flügel 42.1-42.3 sind untereinander mittels dehnbarer Verbindungselemente 43.1-43.3 verbunden, die derart ausgebildet sind, dass sie ein Entfernen der Flügel 42.1-42.3 von der Längsachse 10 und voneinander erlauben.

In der Ausführungsform von Figur 10 sind die drei Flügel 42.1-42.3 des Verriegelungsbauteils 4 wiederum als separate sektorartige Teile ausgebildet. Sie weisen jeweils zwei Haken 44 auf. Auf die benachbarten Haken 44 zweier Flügel kann ein (nicht eingezeichnetes) dehnbares, bspw. ringförmiges Verbindungselement aufgesetzt werden, um die Flügel 42.1-42.3 zusammen zu halten.

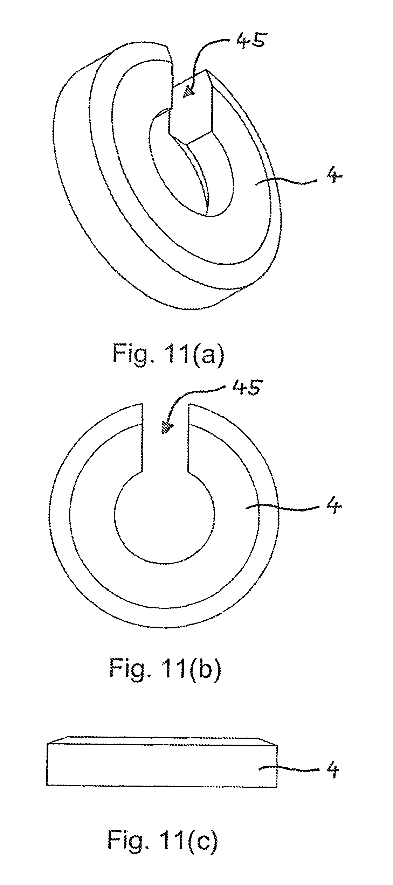

Das Verriegelungsbauteil 4 von Figur 11 hat die Form eines Rings, der an einer Stelle einen radialen Schlitz 45 aufweist. Somit kann das Verriegelungsbauteil 4 nach aussen gespreizt werden.

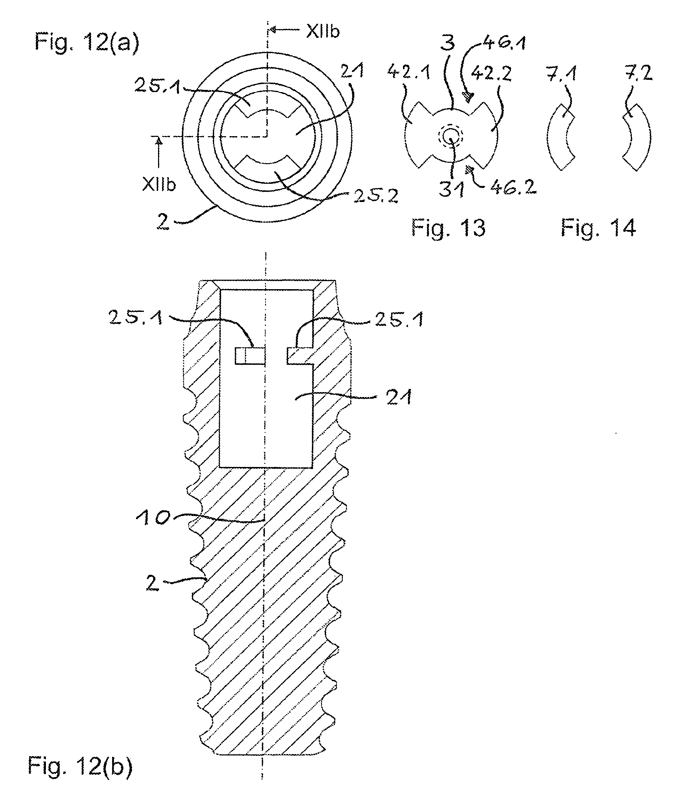

Eine zweite Ausführungsform der erfindungsgemässen Zahnersatzanordnung 1 bzw. Teile davon sind in den Figuren 12-14 dargestellt. Analoge Elemente sind mit denselben Bezugszeichen bezeichnet wie in den Figuren 1-6 und brauchen hier nicht erneut erklärt zu werden.

Im Unterschied zur ersten Ausführungsform der Figuren 1-11 wird hier nicht ein separates Verriegelungsmittel eingesetzt. Vielmehr wird das Verriegelungsmittel 4 durch die äussere Form der Gewindehüise 3 selbst gebildet, nämlich durch zwei einander gegenüber liegende Flügel 42.1, 42.2, die sich in axialer Richtung vorugsweise über die gesamte Länge der Gewindehülse 3 erstrecken. Die Implantatkörperinnenbohrung 21 weist zwei einander gegenüber liegende Vorsprünge 25.1, 25.2 auf, die derart an die Flügel 42.1, 42.2 bzw. an zwischen den Flügeln 42.1, 42.2 liegende Längsnuten 46.1, 46.2 an der Aussenwand der Gewindehülse 4 angepasst sind, dass die Gewindehülse 4 in die Implantatkörperinnenbohrung 21 eingesetzt werden kann. Nach dem Einsetzen wird die Gewindehülse 4 in der Implantatkörperinnenbohrung 21 um die Längsachse 10 rotiert, bis sie eine Lage einnimmt, in welcher sie durch ein Zusammenwirken der Flügel 42.1, 42.2 mit den Vorsprüngen 25.1, 25.2 formschlüssig verankert ist. Im Beispiel der Figuren 12 und 13 wird die Gewindehülse 3 zur Verankerung um 90° um die Längsachse 10 rotiert. Um die Rotation zuzulassen, hat die Implantatkörperinnenbohrung 21 zumindest im unteren Teil, der die Gewindehülse aufnimmt, einen kreisrunden Querschnitt und ist vorzugsweise zylindrisch. In dieser Ausführungsform wird also die Gewindehülse 3 mittels einer Art Bajonettverschluss im Implantatkörper 2 verankert.

Die in axialer Richtung verankerte Gewindehülse 3 muss noch gegen Verdrehung um die Längsachse 10 gesichert werden. Dies kann z. B. durch das Einsetzen zweier Sicherungselemente 7.1, 7.2 in die frei stehenden Längsnuten 46.1, 46.2 erfolgen. Solche Sicherungselemente 7.1, 7.2 sind in Figur 14 in einer Draufsicht dargestellt. Sie ragen im eingesetzten Zustand in axialer Richtung über die Gewindehülse 4 hinaus und stützen sich an den Vorsprüngen 25.1, 25.2 ab. Für eine noch bessere Verankerung können mehrere Vorsprünge übereinander, d. h. in axialer Richtung versetzt, angeordnet sein, wobei die Aussenwand der Gewindehülse 3 entsprechend angepasst sein muss. Auch in dieser Ausführungsform sind anderszählige Drehsymmetrien oder nicht drehsymmetrische Anordnungen möglich.

In einer hier zeichnerisch nicht dargestellten Alternative zur zweiten Ausführungsform der Figuren 12-14 können die Verriegelungsmittel als an der Gewindehülse angebrachte Flügel ausgebildet sein, die sich nur über einen Teil der Länge der Gewindehülse erstrecken. Sie können, analog zur ersten Ausführungsform der Figuren 1-6, zwecks formschlüssiger Verankerung in eine Ringnut in der Implantatkörperinnenbohrung eingreifen. Um das Einsetzen der Gewindehülse zu ermöglichen, weist der obere Teil der Implantatkörperinnenbohrung Längsnuten auf, in welche die Flügel passen. Wenn die Gewindehülse ihre endgültige axiale Lage erreicht hat, wird sie wiederum so um die Längsachse gedreht, dass die Flügel in die Ringnut eingreifen. Danach muss die Gewindehülse noch gegen Verdrehung um die Längsachse gesichert werden, was analog zur Ausführungsform der Figuren 12-14 oder auf andere geeignete Weise erfolgen kann. Auch in dieser Alternative kommt also eine Art Bajonettverschluss zum Einsatz.

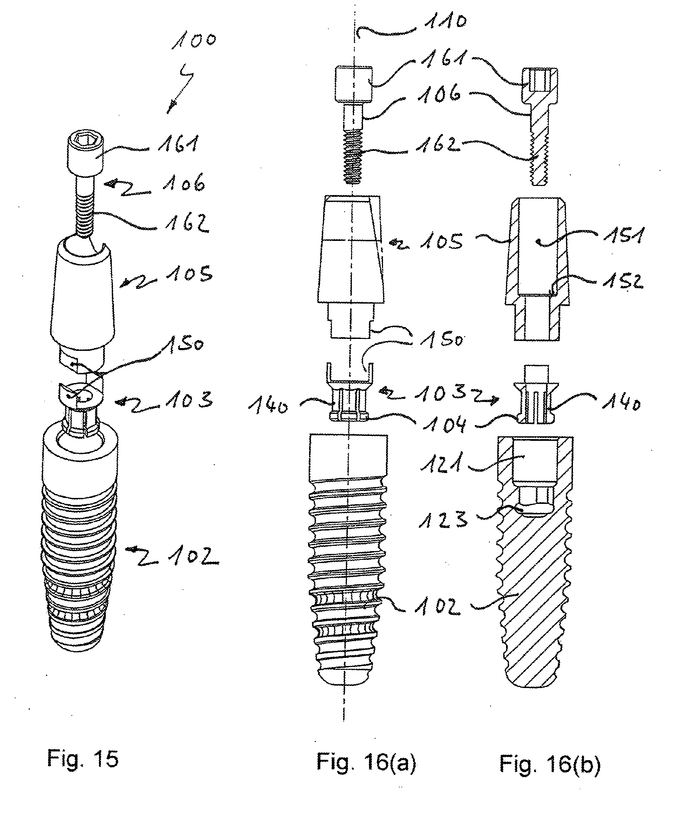

Eine weitere Ausführungsform der erfindungsgemässen Zahnersatzanordnung 100 bzw. Teile davon sind in den Figuren 15 bis 17 in verschiedenen Ansichten und Schnittzeichnungen dargestellt.

Die Zahnersatzanordnung 100 beinhaltet einen enossalen Implantatkörper 102 zur Verankerung der Zahnersatzanordnung 100 in einem (hier nicht eingezeichneten) Kieferknochen. Der Implantatkörper 102 weist in seinem oberen (distalen) Bereich eine nicht durchgehende Innenbohrung 121 auf, die im Wesentlichen koaxial mit einer Längsachse 110 des Implantatkörpers 102 bzw. der Zahnersatzanordnung 100 verläuft. Der Implantatkörper 102 besteht vorzugsweise wiederum aus einem Keramikmaterial (z. B. ZERAMEX^{®}) oder einem biokompatiblen Metall wie Titan.

Die Implantatkörperinnenbohrung 121 dient der Verankerung einer Gewindehülse 103, auf deren Funktion weiter unten eingegangen wird. Die Gewindehülse 103 kann z. B. aus Stahl, Titan oder einem Kunststoff bestehen.

Ferner umfasst die Zahnersatzanordnung 100 ein Abutment 105 zur Aufnahme einer (hier nicht eingezeichneten) Suprakonstruktion, bspw. einer Krone oder einer Brücke. Das Abutment 105 kann z. B. aus einer Zirkonoxidkeramik bestehen. Es weist eine durchgehende !nnenbohrung 151 auf, die im Wesentlichen koaxial mit der Längsachse 110 des Abutments bzw. der Zahnersatzanordnung 100 verläuft.

Die Abutmentinnenbohrung 151 nimmt wiederum eine Kopfschraube 106 zur Verbindung des Abutments 105 mit dem Implantatkörper 102 auf. Ein Kopf 161 der Kopfschraube 106 ist wie bereits oben beschrieben formschlüssig in der Abutmentinnenbohrung 151 abgestützt, bspw. an einer im Inneren der Abutmentinnenbohrung 151 angebrachten umlaufenden Schulter 152. Ein Gewindeteil 162 der Kopfschraube 106 mit einem Außengewinde greift in ein entsprechendes Innengewinde 131 der Gewindehülse 103 ein. Die Kopfschraube 106 kann z. B. aus Stahl, Titan, einem Kunststoff oder einem Keramikmaterial bestehen.

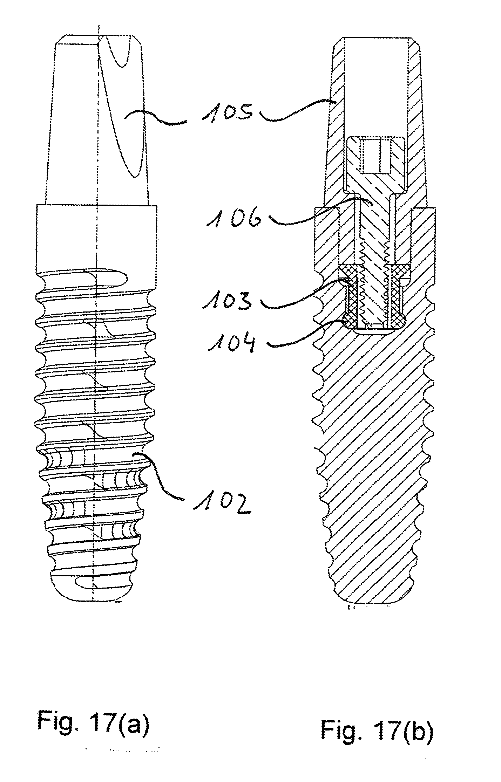

Die Gewindehülse 103 weist im proximalen Bereich eine Mehrzahl von Zungen 140 auf, die durch parallel zur Längsachse geführte Einschnitte in der Gewindehülse 103 voneinander beabstandet sind. Als eigentliche Verriegelungsmittel dienen Radialrippen 104 die im proximalen Bereich der Zungen 140 radial nach aussen gerichtet sind und in eine korrespondierende Radialnut 123 am Grunde der Implantatkörperinnenbohrung 121 eingreifen können. In der Ausführungsform gemäss den Figuren 15 bis 17 ist das Verriegelungsmittel als einstückig mit der Gewindehülse 103 verbundene Mehrzahl von Verriegelungsrippen 104 ausgebildet. Das Verriegelungsmittel 104 ist durch eine flexible Lagerung auf den Zungen 140 in Radialrichtung beweglich ausgebildet. Die Gewindehülse 103 mit den Verriegelungsrippen 104 ist so beschaffen, dass in einem Einfuhrzustand, in dem sie in die Implantatkörperinnenbohrung 21 eingeführt wird, seine maximale radiale Ausdehnung der Rippen kleiner ist als ein Durchmesser der Implantatkörperinnenbohrung, so dass es durch eine obere (distale) Öffnung 122 in die Implantatkörperinnenbohrung 121 eingeführt werden kann. In einem Endzustand, der in den Figuren 17(a) und 17(b) gezeigt ist, greifen die Verriegelungsrippen 104 mit einer maximalen radialen Ausdehnung, die grösser ist als der Durchmesser der Implantatkörperinnenbohrung 121 in die Ringnut 123 ein. So kommt ein Formschluss und allenfalls auch ein Kraftschluss zwischen der Verriegelung 104 der Gewindehülse 103 und der Ringnut 123 zustande.

Nachfolgend wird das Einsetzen, d. h. das Einführen und das Befestigen des Abutments 105 im bereits inserierten Implantatkörper 102 beschrieben. Die Kopfschraube 106 wird von oben in die Abutmentinnenbohrung 151 eingeführt, so dass ihr unterer Gewindeteil 161 aus einer unteren (proximalen) Öffnung aus dem Abutment 105 herausragt. Von unten wird die Gewindehülse 103 mittels Formschlussmitteln 150 verdrehsicher auf den Abutmentstamm 154 aufgesteckt und teilweise auf den Gewindeteil 162 aufgeschraubt. Die Kopfschraube 6 wird soweit in die Gewindehülse eingeschraubt, dass der proximale Bereich mit den Zungen frei, respektive in seinem Einführzustand bleibt. Die so zusammengehaltenen Elemente 103, 105 und 106 werden nun von oben in die Implantatkörperinnenbohrung 121 eingeführt, wobei die Rippen auf den flexiblen Zungen radial nach innen federn können. Wenn sie ihre Endlage in der Implantatkörperinnenbohrung 121 erreicht haben, wird die Kopfschraube 106 komplett eingedreht und fest angezogen. Dadurch dringt das Gewindeteil 162 zwischen die Zungen ein und fixiert diese und damit die Rippen in der Verriegelungsstellung. Je nach Ausgestaltung der Zungen können diese auch zusätzlich von der Schraube nach aussen in die Ringnut 123 gespreizt werden. Der verriegelte Endzustand ist im Längsschnitt gemäss Figur 17(b) dargestellt.

Die Gewindehülse 103 mit ihren Rippen 104 greift in die Ringnut 123 ein und verankert sich in der Implantatkörperinnenbohrung 121. Das Abutment 105 wird mit einer durch das Anziehen der Kopfschraube 106 definierten axialen Kraft gegen einen oberen Rand 124 des Implantatkörpers 102 und gegen die im Implantatkörper 102 abgestützte Gewindehülse gezogen.

## Patentansprüche

1. Zahnersatzanordnung (1, 100), umfassend einen enossalen Implantatkörper (2, 102)zur Verankerung der Zahnersatzanordnung (1, 102) in einem Kieferknochen, wobei der Implantatkörper (2, 102) eine Innenbohrung (21, 121) aufweist, eine in der Implantatkörperinnenbohrung (21, 121) verankerte Gewindehülse (3, 103), ein Abutment (5, 105) zur Aufnahme einer Suprakonstruktion, welches Abutment (5, 105) eine Abutmentinnenbohrung (51, 151) aufweist, und eine Kopfschraube (6, 106) zur Verbindung des Abutments (5, 105) mit dem Implantatkörper (2, 102), wobei ein Kopf (61, 161) der Kopfschraube (6, 106) formschlüssig in der Abutmentinnenbohrung (51, 151) abgestützt ist und ein Gewindeteil (62, 162) der Kopfschraube (6, 106) in die Gewindehülse (3, 103) eingreift und die Gewindehülse (3, 103) mittels Verriegelungsmittel (4, 104) in der Implantatkörperinnenbohrung (21, 121) formschlüssig verankerbar ist, wobei die Implantatkörperinnenbohrung (21, 121) nicht durchgehend ist und die Verriegelungsmittel (4, 104) in eine Ringnut (23, 123), die in einer Wand der Implantatkörperinnenbohrung (21, 121) angebracht ist, eingreifen und in dieser abgestützt sind, **dadurch gekennzeichnet, dass** die Verriegelungsmittel als ein in radialer Richtung nach aussen spreizbares Verriegelungsbauteil (4) ausgebildet sind, welches in einem ungespreizten Zustand in die Implantatkörperinnenbohrung (21) einführbar ist und in einem gespreizten Zustand in die Ringnut (23) eingreift.

2. Zahnersatzanordnung (1) nach Anspruch 1, wobei das Verriegelungsbauteil (4) mindestens zwei flügelartige, in einer zu einer Längsachse (10) senkrechten Ebene angeordnete Sektoren (42.1-42.3) beinhaltet, die durch dehnbare, vorzugsweise elastische Verbindungsmittel (43) miteinander verbunden sind.

3. Zahnersatzanordnung (1) nach Anspruch 1 oder 2, wobei das Verriegelungsbauteil (4) eine Bohrung (41) aufweist, in welche ein konusförmiges Ende (32) der Gewindehülse (3) eindringt, um das Verriegelungsbauteil (4) nach aussen zu spreizen.

4. Zahnersatzanordnung (1) nach einem der vorangehenden Ansprüche, wobei die Implantatkörperinnenbohrung (21), eine Aussenwand der Gewindehülse (3), die Verriegelungsmittel (4) und/oder ein in die Implantatkörperinnenbohrung (21) eingreifendes Ende (54) des Abutments (5) um eine Längsachse (10) drehsymmetrisch ausgeführt sind und der Drehsymmetriewinkel vorzugsweise 120° oder 60° beträgt.

5. Zahnersatzanordnung (100) nach Anspruch 1, wobei eine Mehrzahl von Verriegelungsmitteln, als Abschnitte einer nach aussen stehenden Radialrippe (104) auf jeweils einzelnen voneinander beabstandeten flexiblen Zungen (140) im proximalen Bereich der Gewindehülse (103) angeordnet sind.

6. Zahnersatzanordnung (1, 100) nach einem der vorangehenden Ansprüche, wobei der Implantatkörper (2, 102) aus einem Keramikmaterial oder einem biokompatiblen Metall wie Titan, die Gewindehülse (3, 103) Stahl, Titan, einem Kunststoff oder einem Keramikmaterial, die Verriegelungsmittel (4, 104) aus Stahl, Titan, Kunststoff oder einem Keramikmaterial, das Abutment (5, 105) aus einer Zirkonoxidkeramik und/oder die Kopfschraube (6, 106) aus Stahl, Titan, einem Kunststoff oder einem Keramikmaterial besteht.

7. Verfahren zum Aufbau einer Zahnersatzanordnung (1) nach Anspruch 3, wobei die Kopfschraube (6) von einer distalen Seite her in die Abutmentinnenbohrung (51) eingeführt wird, so dass ihr Gewindeteil (62) auf einer proximalen Seite aus dem Abutment (5) herausragt,
das Verriegelungsbauteil (4) mit seiner Bohrung (41) auf den Gewindeteil (62) aufgesetzt und mit der Gewindehülse (3) gesichert wird,
die so zusammengehaltenen Elemente (3-6) in die Implantatkörperinnenbohrung (21) eingeführt werden,
die Kopfschraube (6) fester angezogen wird, so dass das konusförmige Ende (32) der Gewindehülse (3) in die Verriegelungsbauteilbohrung (41) gedrückt wird, und
das Verriegelungsbauteil (4) durch das Eindringen des konusförmigen Endes (32) der Gewindehülse (3) nach aussen in die Ringnut (23) gespreizt wird.

## Claims

1. Dental prosthesis arrangement (1, 100) comprising an enossal implant body (2, 102) for anchoring the dental prosthesis arrangement (1, 100) in a jaw bone, wherein the implant body (2, 102) has an inner bore (21, 121), a threaded sleeve (3, 103), which is anchored in the inner bore (21, 121) of the implant body, an abutment (5, 105), which is intended for accommodating a superstructure and has an inner bore (51, 151), and a cap screw (6, 106), for connecting the abutment (5, 105) to the implant body (2, 102), wherein a head (61, 161) of the cap screw (6, 106) is supported in a form-fitting manner in the inner bore (51, 151) of the abutment, and a threaded part (62, 162) of the cap screw (6, 106) engages in the threaded sleeve (3, 103), and the threaded sleeve (3, 103) can be anchored in a form-fitting manner, by way of locking means (4, 104), in the inner bore (21, 121) of the implant body, wherein the inner bore (21, 121) does not pass all the way through the implant body, and the locking means (4, 104) engage, and are supported in, an annular groove (23, 123), which is provided in a wall of the inner bore (21, 121) of the implant body, **characterized in that** the locking means are designed in the form of a locking component (4) which can be spread outwards in the radial direction and, in a non-spread state, can be introduced into the inner bore (21) of the implant body and, in a spread state, engages in the annular groove (23).

2. Dental prosthesis arrangement (1) according to Claim 1, wherein the locking component (4) contains at least two wing-like sectors (42.1-42.3), which are arranged in a plane perpendicular to a longitudinal axis (10) and are connected to one another by expansible, preferably elastic connecting means (43).

3. Dental prosthesis arrangement (1) according to Claim 1 or 2, wherein the locking component (4) has a bore (41), into which a conical end (32) of the threaded sleeve (3) penetrates in order to spread the locking component (4) in the outward direction.

4. Dental prosthesis arrangement (1) according to one of the preceding claims, wherein the inner bore (21) of the implant body, an outer wall of the threaded sleeve (3), the locking means (4) and/or an end (54) of the abutment (5), said end engaging in the inner bore (21) of the implant body, are configured to be rotationally symmetrical about a longitudinal axis (10), and the angle of rotation of symmetry is preferably 120° or 60°.

5. Dental prosthesis arrangement (100) according to Claim 1, wherein a plurality of locking means are arranged as portions of an outwardly projecting radial rib (104) in each case on individual spaced-apart flexible tongues (140) in the proximal region of the threaded sleeve (103).

6. Dental prosthesis arrangement (1, 100) according to one of the preceding claims, wherein the implant body (2, 102) consists of a ceramic material or a biocompatible metal such as titanium, the threaded sleeve (3, 103) consists of steel, titanium, a plastics material or a ceramic material, the locking means (4, 104) consist of steel, titanium, a plastics material or a ceramic material, the abutment (5, 105) consists of a zirconium oxide ceramic material and/or the cap screw (6, 106) consists of steel, titanium, a plastics material or a ceramic material.

7. Method of constructing a dental prosthesis arrangement (1) according to Claim 3, wherein the cap screw (6) is introduced into the inner bore (51) of the abutment from a distal side, and therefore the threaded part (62) of the cap screw projects out of the abutment (5) on a proximal side,
the locking component (4) is positioned on the threaded part (62) by way of its bore (41) and secured by the threaded sleeve (3),
the elements (3-6) held together in this way are introduced into the inner bore (21) of the implant body,
the cap screw (6) is tightened, and therefore the conical end (32) of the threaded sleeve (3) is pushed into the locking-component bore (41), and the penetration of the conical end (32) of the threaded sleeve (3) causes the locking component (4) to be spread outwards into the annular groove (23).

## Revendications

1. Ensemble prothétique dentaire (1, 100), comprenant un corps d'implant endo-osseux (2, 102) pour l'ancrage de l'ensemble prothétique dentaire (1, 100) dans un os de mâchoire, le corps d'implant (2, 102) présentant un alésage interne (21, 121), une douille filetée (3, 103) ancrée dans l'alésage interne (21, 121) du corps d'implant, une butée (5, 105) destinée à recevoir une superstructure, laquelle butée (5, 105) présente un alésage interne de butée (51, 151), et une vis à tête (6, 106) pour la connexion de la butée (5, 105) au corps d'implant (2, 102), une tête (61, 161) de la vis à tête (6, 106) étant supportée par engagement positif dans l'alésage interne de butée (51, 151) et une partie filetée (62, 162) de la vis à tête (6, 106) venant en prise dans la douille filetée (3, 103) et la douille filetée (3, 103) pouvant être ancrée par engagement positif dans l'alésage interne (21, 121) du corps d'implant par le biais de moyens de verrouillage (4, 104), l'alésage interne (21, 121) du corps d'implant n'étant pas traversant et les moyens de verrouillage (4, 104) venant en prise et étant supportés dans une rainure annulaire (23, 123) qui est pratiquée dans une paroi de l'alésage interne (21, 121) du corps d'implant, **caractérisé en ce que** les moyens de verrouillage sont réalisés sous la forme d'un composant de verrouillage (4) pouvant être écarté vers l'extérieur dans la direction radiale, lequel peut être introduit dans l'alésage interne (21) du corps d'implant dans un état non écarté et vient en prise dans la rainure annulaire (23) dans un état écarté.

2. Ensemble prothétique dentaire (1) selon la revendication 1, dans lequel le composant de verrouillage (4) contient au moins deux secteurs (42.1-42.3) de type ailes, disposés dans un plan perpendiculaire à un axe longitudinal (10), lesquels sont connectés l'un à l'autre par des moyens de liaison extensibles (43), de préférence élastiques.

3. Ensemble prothétique dentaire (1) selon la revendication 1 ou 2, dans lequel le composant de verrouillage (4) présente un alésage (41) dans lequel pénètre une extrémité de forme conique (32) de la douille filetée (3) afin d'écarter vers l'extérieur le composant de verrouillage (4).

4. Ensemble prothétique dentaire (1) selon l'une quelconque des revendications précédentes, dans lequel l'alésage interne (21) du corps d'implant, une paroi extérieure de la douille filetée (3), les moyens de verrouillage (4) et/ou une extrémité (54) de la butée (5) venant en prise dans l'alésage interne (21) du corps d'implant sont réalisés avec une symétrie de révolution autour d'un axe longitudinal (10) et l'angle de symétrie de révolution vaut de préférence 120° ou 60°.

5. Ensemble prothétique dentaire (100) selon la revendication 1, dans lequel une pluralité de moyens de verrouillage, en tant que portions d'une nervure radiale (104) faisant saillie vers l'extérieur, sont disposés dans la région proximale de la douille filetée (103) respectivement sur des langues flexibles individuelles (140) séparées les unes des autres.

6. Ensemble prothétique dentaire (1, 100) selon l'une quelconque des revendications précédentes, dans lequel le corps d'implant (2, 102) se compose d'un matériau céramique ou d'un métal biocompatible tel que du titane, la douille filetée (3, 103) se compose d'acier, de titane, d'une matière plastique ou d'un matériau céramique, les moyens de verrouillage (4, 104) se composent d'acier, de titane, de matière plastique ou d'un matériau céramique, la butée (5, 105) se compose d'une céramique d'oxyde de zirconium et/ou la vis à tête (6, 106) se compose d'acier, de titane, d'une matière plastique ou d'un matériau céramique.

7. Procédé de fabrication d'un ensemble prothétique dentaire (1) selon la revendication 3, dans lequel la vis à tête (6) est introduite depuis un côté distal dans l'alésage interne de butée (51), de telle sorte que sa partie filetée (62) fasse saillie d'un côté proximal hors de la butée (5),
le composant de verrouillage (4) est placé avec son alésage (41) sur la partie filetée (62) et est fixé à la douille filetée (3),
les éléments ainsi maintenus ensemble (3-6) sont introduits dans l'alésage interne (21) du corps d'implant,
la vis à tête (6) est vissée fermement, de telle sorte que l'extrémité de forme conique (32) de la douille filetée (3) soit enfoncée dans l'alésage du composant de verrouillage (41), et
le composant de verrouillage (4) est écarté vers l'extérieur dans la rainure annulaire (23) par l'enfoncement de l'extrémité de forme conique (32) de la douille filetée (3).
